Europäisches Patentamt

European Patent Office

Office européen des brevets

(11) Publication number: **0 243 656 B1**

## EUROPEAN PATENT SPECIFICATION

(45) Date of publication of patent specification: **16.06.93**  (51) Int. Cl.⁵: **G11B 13/04**, G11B 11/10

(21) Application number: **87104077.0**

(22) Date of filing: **20.03.87**

(54) **Method and apparatus for encoding and direct overwriting of magneto-optic data.**

(30) Priority: **24.04.86 US 855542**

(43) Date of publication of application:
**04.11.87 Bulletin 87/45**

(45) Publication of the grant of the patent:
**16.06.93 Bulletin 93/24**

(84) Designated Contracting States:
**DE FR GB IT**

(56) References cited:
**DE-A- 3 200 134**
**FR-A- 1 547 812**

**PHILIPS TECHNICAL REVIEW. vol. 42, no. 2, August 1985, EINDHOVEN NL pages 37 - 47; M.Hartmann et al: "Erasable magneto-optical recording"**

**PATENT ABSTRACTS OF JAPAN vol. 7, no. 266 (P-239)(1411) 26 November 1983, & JP-A-58 146008**

**PATENT ABSTRACTS OF JAPAN vol. 10, no. 102 (P-448)(2159) 18 April 1986, & JP-A-60 234252**

(73) Proprietor: **International Business Machines Corporation**
**Old Orchard Road**
**Armonk, N.Y. 10504(US)**

(72) Inventor: **Gerber, Ulrich Gerhard**
**1215 St Joseph Avenue Los Altos California 94022(US)**
Inventor: **Ruger, Daniel**
**228 Webster Apt. D**
**Palo Alto California 94301(US)**

(74) Representative: **Burt, Roger James, Dr.**
**IBM United Kingdom Limited Intellectual Property Department Hursley Park Winchester Hampshire SO21 2JN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to magneto-optic data storage devices, more particularly, to writing new encoded data over old data in devices of that kind. Presently, most magneto-optic data storage devices require one rotation of the disk to erase old data before new data can be written. This arrangement is used because of the difficulty to switch the polarity of the magnetic field rapidly enough to correspond to the new data stream to facilitate directly overwriting old data.

USP 3,676,867 teaches an arrangement and interaction of a laser and magnetic-field-producing coil for magnetizing a thin film in an easy direction of magnetization normal to the substrate on which the thin film is deposited. The magnetic field, being weaker than the coercive force of the film, is used for erasing and creating reversed domains in the film at points which are simultaneously heated by a laser beam.

USP 4,340,914, USP 4,495,530 and USP 3,778,791 disclose methods in which the magnetic field is controlled or modulated by a signal representing data. USP 4,495,530 actually teaches away from using a electromagnet for producing a bi-polar magnetic field because of perceived high frequency limitations of such an arrangement. Instead, two other systems configurations for processing information recorded on a magneto-optic medium are described. In one configuration, described for example in 'Erasable Magneto-Optical Recording' Philips Technical Review Vol. 42, No. 2, August 1985, pages 37-47, a pulsed laser is used with a steady-state DC magnetic field. In the other, the magnetic field is driven by the data signal which interacts with a continuous wave laser. Finally, in USP 4,472,748 describes a system in which a constant erasing light beam and a modulated recording light beam are focused on adjacent tracks and a reversible external magnetic field is applied to the recording medium. The polarity of the erased tracks alternates every other track. The magnetic field is reversed by switching the direct current supplied to the magnetic-field-generating coil at each revolution of the disk.

USP 4,466,004 discloses a technique whereby a continuous laser heating source interacts with a data modulated magnetic field. Data is recorded in the magneto-optic medium when the polarity of the applied magnetic field corresponds to the polarity of the code for the desired data.

The forming of circular domains with a laser beam in magnetically coercive materials is known from, for example USP 3,786,452, 3,836,895, 3,787,825 and 3,836,897; however, use of patterns of such domains, including overlapping of successive circular domains to form variable-length elongated domains, for recording encoded data is not shown.

The present invention provides high linear bit density, substantial immunity to domain size variation and good erasability in a magneto-optic data storage system. In addition, since data may be directly overwritten, overall system speed is enhanced.

According to the present invention, data may be directly overwritten in a magneto-optic medium by locally heating a domain in the active layer of the medium with a short pulse of laser light in the presence of a periodically alternating magnetic field produced by a high frequency resonant coil. By selecting the duration of the laser pulse to be a small fraction of the period of the alternating magnetic field and controlling the timing of the pulse with respect to the phase of the alternating magnetic field, encodable circular and variable-length elongated magnetic domains can be written in the medium. When the locally heated domain cools, that domain in the medium is magnetized in either up or down direction normal to the plane of the substrate in which the medium is deposited as determined by the phase of the alternating magnetic field.

In the present invention, pulse-width modulation (PWM) is used to encode data. Such modulation is produced by controlling the distance between the walls of magneto-optically polarized domains along a track in the medium. Such domains, according to the present invention, may be controllably elongated by overlapping circular domains produced by firing the laser synchronously with the oscillating magnetic field. The overlapped circular domains form continuous domains of variable-length.

Fig. 1 is a schematic cross-sectional view of a magneto-optic recording system according to the principles of the present invention.

Fig. 2 is a timing diagram showing the timing of laser pulses with respect to the phase of applied magnetic field for the system of Fig. 1.

Figs. 3A, 3B and 3C are schematic diagrams of resonant circuits for producing a magnetic field for the system of Fig. 1.

Fig. 4 is a timing diagram showing the formation of encodable variable-length magnetic domains for the system of Fig. 1.

Fig. 5 is a timing diagram showing the encoding of data for the system of Fig. 1.

Fig. 6 is a track diagram showing the immunity to spot-size variation for the system of Fig. 1.

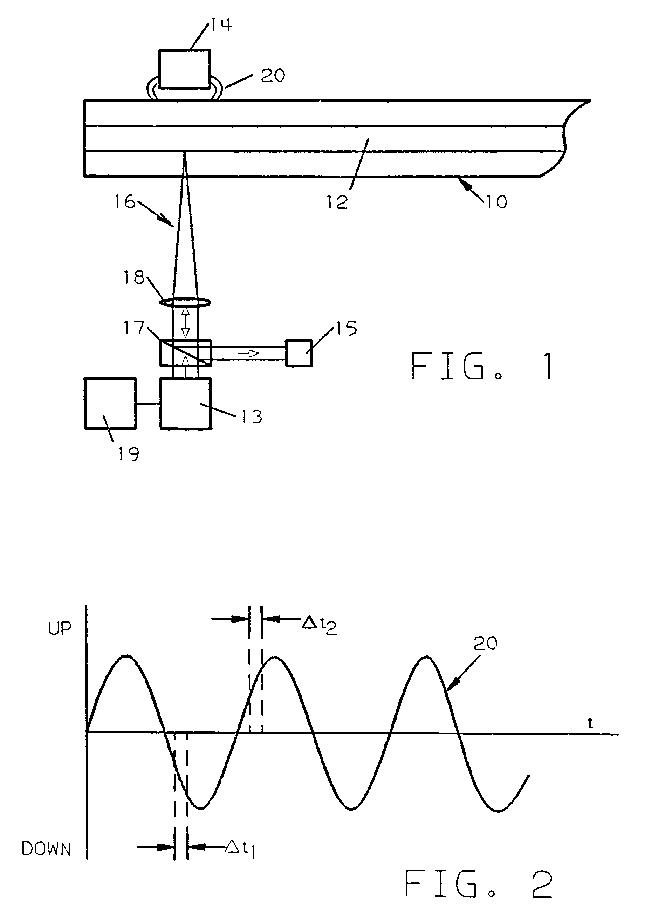

Referring to Fig. 1, a magneto-optic recording system according to the principles of the present invention, comprises recording medium 10 having active layer 12, a source of laser light 13, under the control of laser controller 19, for producing pulsed laser light beam 16 focussed on active layer 12 by lens 18, and a source of alternating magnetic field 14 for producing an alternating magnetic field at megahertz frequencies in the vicinity of the area in active layer 12 at which laser beam 16 is focussed. Laser beam 16 is used to locally heat a domain in active layer 12 in the presence of alternating magnetic field 20 to form a magnetized domain of either up or down direction normal to the plane of medium 10. Detector 15, which includes well-known optics and electronic circuitry for detecting laser light reflected back from layer 12, produces a readback signal therefrom which represents recorded data.

As shown in Fig. 2, the laser beam is applied to active layer 12 in short pulses the duration of which being a small fraction of the period of alternating magnetic field 20. When the medium cools after the laser pulse terminates, the medium is magnetized in the direction of applied magnetic field at the time the laser pulse was applied. For example, if laser pulse 16 were applied to active layer 12 during time $\Delta t_1$, the polarity of the magnetized domain in the active layer is in the down direction with respect to the plane of active layer 12. Similarly, if laser beam 16 were applied to active layer 12 during time $\Delta t_2$, the magnetization at the domain would be in the up direction with respect to the plane of active layer 12.

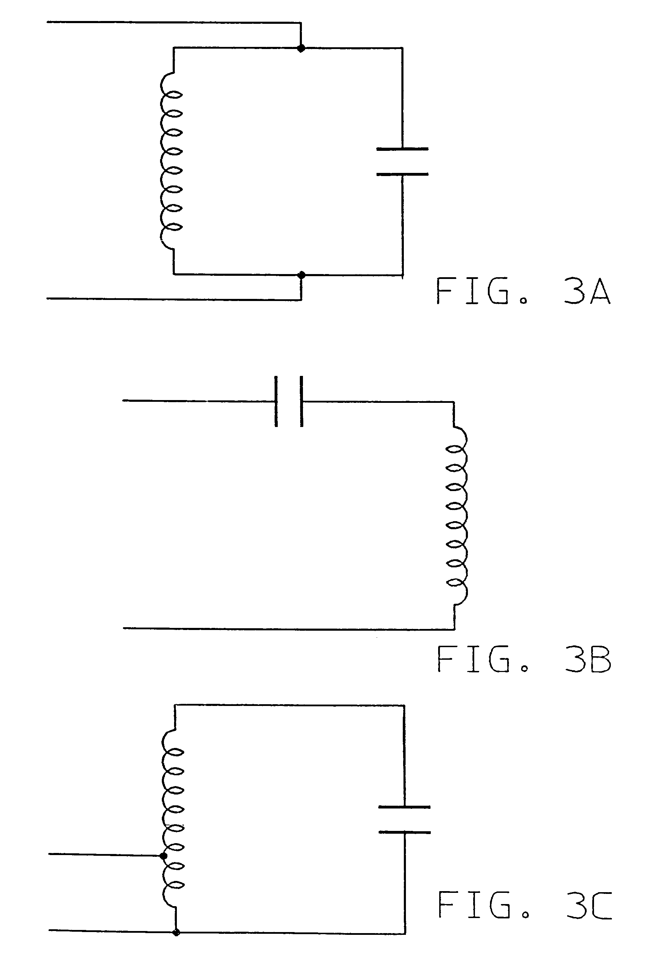

Magnetic field 20 may be produced any number of ways. According to the present invention, however, to achieve megahertz frequencies, a resonant coil circuit is used. Three embodiments of resonant coil circuits are shown in Figs. 3A-3C. In Fig. 3A, a parallel resonant circuit provides a high input impedance which can be matched to a 50 ohm driver by a step-up transformer. In Fig. 3B, a series resonant circuit, having low input impedance can be matched to driver impedance using a step-down transformer. In Fig. 3C, a parallel resonant circuit with a tapped coil provides impedance matching and required resonant magnetic fields. Component values are determined by the desired operating frequency of magnetic source 14.

Employing the circuit of Fig. 3C, an alternating magnetic field of 200 gauss peak-to-peak can be produced by a coil wound on a rod-like ferrite core. When driven at approximately 25 watts of input power, the circuit, which had a Q of approximately 30 and an input impedance of 50 ohms, resonated at a frequency of 2.3 megahertz. With such a circuit acting as magnetic source 14 disposed approximately one millimeter away from active layer 12, encodable magnetic domains are produced in active layer 12 with 40 nanosecond duration pulses from laser light source 13. Laser light source 13 may be any commonly available laser, such as a gallium arsenide diode laser.

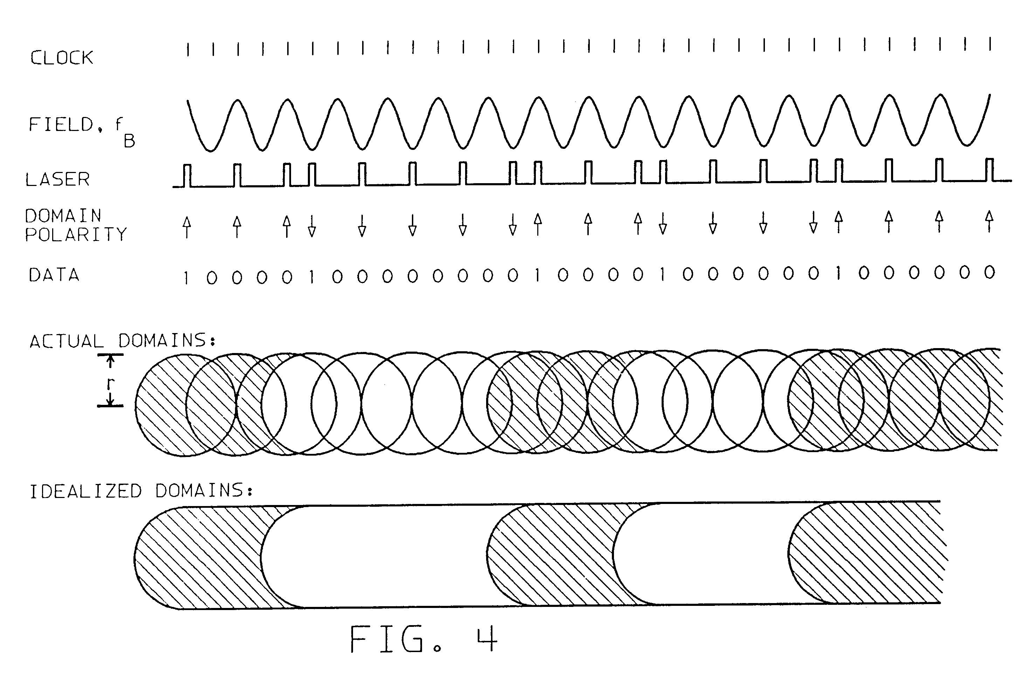

Fig. 4 illustrates a method of encoding data which is compatible with the high frequency magnetic field direct-overwrite system of the present invention. The distance between magnetic domain walls formed in active layer 12 is used to encode the data which is a form of PWM encoding. Continuous elongated domains are formed in active layer 12 by activating laser source 13 several times, once per period during corresponding phases of the alternating magnetic field. Each laser pulse forms a circular domain. For a high enough laser pulse rate and low enough disk velocity, successively formed circular magnetic domains of the same magnetization direction may be disposed in overlapping relationship to form continuous elongated domains of variable-length.

Referring now to Fig. 4, if the frequency of magnetic field 20 is $f_B$ and the radius of a single domain formed in active layer 12 is r, successively formed circular domains will overlap if d is less than 2r, where d is the maximum distance between successive circular domains.

For good erasability and low signal noise, a high percentage of overlap of one domain over another is desirable. Even so, the edges of the resulting elongated domain are not straight, tending to be "scalloped". The fraction of unwritten area, u, compared to an idealized domain with straight edges may be approximated by

$$u \ = \ 1/2\sqrt{[1- \ 1 \ - \ d^2/4r^2]}$$

If d = r, then u is 6.0%, which is a measure of overlap imperfection. Imperfect overlap and resulting unwritten area may cause high frequency noise to be present in the detected signal. However, noise can be negligible if the value of 1/d is near the spatial frequency cutoff of the optical detection system or if the domain width is substantially larger than the optical beam size. In addition, the magnetic properties of the medium may act to smooth out the submicron domain width variations leading to further reduction in noise. The overlap imperfection can also be reduced by making d smaller. For example, if d = 0.5r, the u is reduced to 1.6%.

The requirement for good domain overlap sets a limitation on disk velocity. If d = r is the desired overlap parameter, then disk velocity is given by

$$v = rf_B.$$

In converting user data to encoded data, pulse crowding and clock synchronization must be considered. In magnetic recording, these considerations are characterized by the concept of (d,k) parameters in run length limited (RLL) codes. The same parameters are applicable to the magneto-optic direct overwrite recording system of the present invention if further constrained by requiring that the number of consecutive zeroes in (d,k) codes be even.

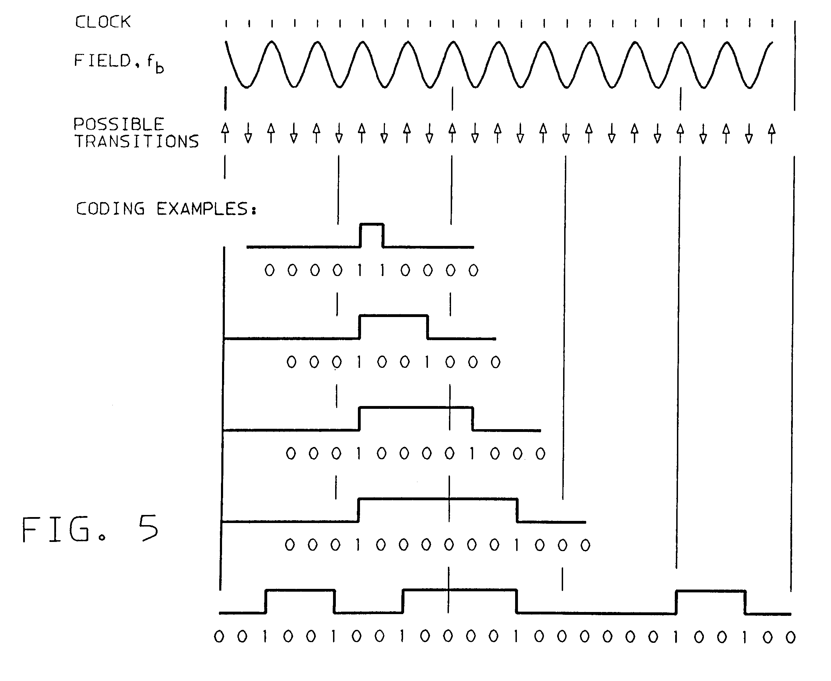

Referring to Fig. 5, laser source 13 under the control of laser controller 19 may be activated twice during the period of the magnetic field. Thus, the frequency of clock pulses is $2f_B$. Up-oriented domains may be formed by activating a laser on odd clock pulses, and down- oriented domains may be formed on even clock pulses. Therefore, down-to-up transitions may be formed only at odd clock pulses. Similarly, up-to-down transitions may be formed only at even odd clock pulses.

Since a change in magnetic orientation at domain walls within a clock period represents a binary 1 while no such change during a clock period represents a zero, an already "up" oriented domain must be changed to a "down" oriented domain to produce a binary 1 (and conversely). Thus, as shown in Fig. 5., transitions are necessarily separated by an even number of clock pulses, and binary 1's in (d, k) constrained RLL codes applicable to the present invention are separated by an even number of zeroes.

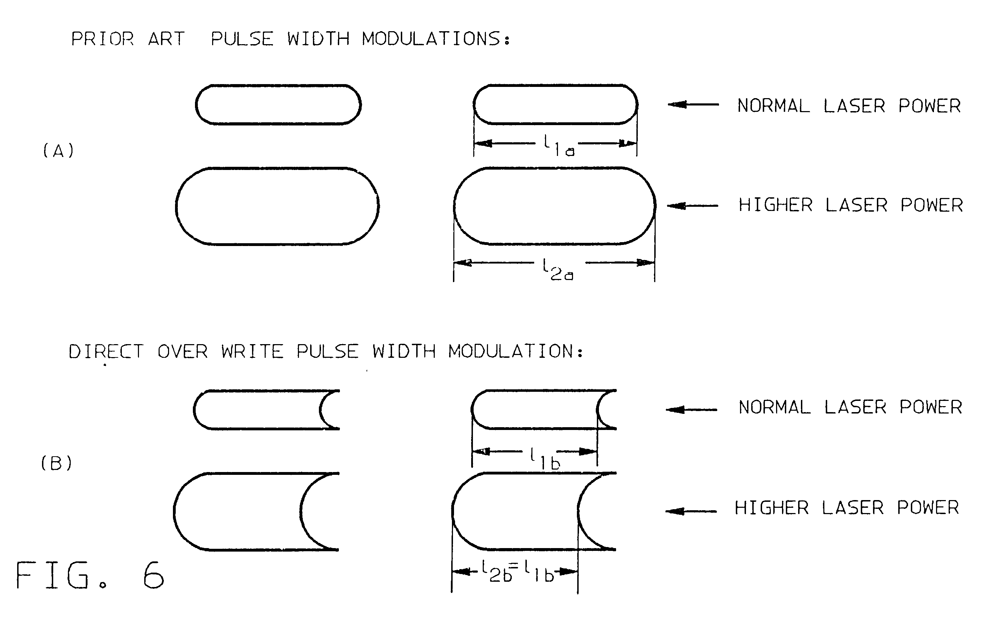

The size of a basic circular domain found in magneto-optic media can vary as a result of many factors including laser power, media sensitivity, ambient temperature, magnetic field strength, focussing error and contamination on the substrate and in the optical subsystem. Referring now to track (a) of Fig. 6, in traditional pulse width modulation encoding, the domains are formed using a single orientation of magnetic field. If the diameter of the basic circular domain increases for some reason, then the length of the encoded domain undesirably elongates along the recording track. If the length change is large enough in a high density storage device, detection errors will arise during data decoding.

In the present invention, the distance between domain transitions along the recording track is substantially unaffected by a change in the diameter of the basic circular domains comprising the elongated domains as shown at track (b) of Fig. 6. If the diameter of the basic circular domains changes, the overlapping relationship of adjacent up-and down-oriented domains formed in active layer 12 according to this invention tends to cancel elongation of such domains along the recording track. See, for example, that $l_{1a}$ does not equal $l_{2a}$ in track (a) domains, but $l_{1b}$ substantially equals $l_{2b}$ in track (b). Thus, the distance between transitions will be insensitive to variations in the size of the basic circular domains.

## Claims

1. Apparatus for direct overwriting of encoded data along a track in a magneto-optic recording medium, said apparatus comprising means (14) for producing a high frequency magnetic field having periodically alternating magnetic polarity near the track; and pulsed heating means (13,19) coupled to the magnetic field producing means, for selectively applying heat to said medium to form successively overlapping magnetically polarised domains representing encoded data along the track, heat being selectively applied at such times when the instantaneous polarity of the magnetic field at said domains corresponds to the polarity of the code for the data to be recorded thereat.

2. Apparatus as in claim 1, wherein the magnetic polarity of the magnetic field alternates at frequency $f_B$; and the pulsed heating means may be activated at a frequency of approximately $2f_B$.

3. Apparatus as in claim 2, wherein the pulsed heating means may be activated at least once during each period of the alternating magnetic field.

4. Apparatus as in claim 2, wherein: each of said successively overlapping domains is substantially circular; and the relative velocity, v, of the track with respect to the magnetic field producing means and the pulsed heating means is given by the relation $v \leq rf_B$, where r is the radius of one of said overlapping domains.

5. Apparatus as in claim 4, wherein the maximum distance between successive domains is less than 2r.

6. Apparatus as in claim 5, wherein the distance between successive domains is approximately equal to r.

7. Apparatus as in claim 6, wherein the distance between successive domains is approximately equal to 0.5r.

8. Apparatus as in claim 1, wherein: the magnetic field producing means includes a resonant coil; and the pulsed heating means includes a selectively controllable source of laser light.

9. Apparatus as in claim 1, wherein said successively overlapping domains form a series of selectively variable-length, substantially continuous, elongated magnetically polarized domains for encoding data in pulse width modulation codes.

10. Apparatus as in claim 9, wherein the encoded data represented by said elongated domains is substantially unaffected by variation in the size of said successively overlapping domains.

11. Apparatus as in claim 10, wherein each of said successively overlapping domains is substantially circular; and the length of said elongated magnetically polarized domains along the track is substantially unaffected by variation in the diameter of each of said successively overlapping substantially circular domains.

12. Apparatus as in claim 9, wherein the pulse width modulation code is run length limited; and the number of consecutive zeroes in said code is even.

13. A method for direct overwriting of encoded data along a track in a magneto-optic recording medium, said method comprising the steps of providing a high frequency magnetic field having periodically alternating magnetic polarity near the track; and selectively applying heat to said medium to form successively overlapping magnetically polarized domains representing encoded data along the track, heat being selectively applied at such times when the instantaneous polarity of the magnetic field at said domains corresponds to the polarity of the code for the data to be recorded thereat.

14. A method as in claim 13, wherein the step of providing a magnetic field includes the step of alternating the polarity of the magnetic field at frequency $f_B$; and the step of selectively heating includes the step of selectively heating domains at a frequency of approximately $2f_B$.

15. A method as in claim 14, wherein the step of selectively heating includes the step of selectively heating domains at least once during each period of the alternating magnetic field.

16. A method as in claim 14 further including the steps of: forming successively overlapping, substantially circular domains; and moving the track with respect to the first and second means at a relative velocity, v, given approximately by the relation $v \leq rf_B$, where r is the radius of one of said domains.

17. A method as in claim 16, wherein the step of forming successive domains includes the step of forming successive domains having a distance apart of less than 2r.

18. A method as in claim 17, wherein the step of forming successive domains includes the step of forming successive domains having a distance apart of approximately r.

19. A method as in claim 18, wherein the step of forming successive domains includes the step of forming successive domains having a distance apart of approximately 0.5r.

20. A method as in claim 13 further including the step of forming a series of selectably variable-length substantially continuous, elongated, magnetically polarized domains for encoding data in pulse width modulation codes.

21. A method as in claim 20 further including the step of encoding data represented by said elongated domains which is substantially unaffected by variation in the size of said successively overlapping domains.

22. a method as in claim 21 further including the steps of: forming successively overlapping, substantially circular domains; forming elongated magnetically polarized domains, the length of which along the track being substantially unaffected by variation in the diameter of each of said successively overlapping, substantially circular domains.

23. A method as in claim 20 further including the steps of: encoding data in pulse width modulation code which is run length limited; and further constraining said code so that the number of consecutive zeroes in said code is even.

## Patentansprüche

1. Vorrichtung zum direkten Überschreiben codierter Daten längs einer Spur eines magnetooptischen Aufzeichnungsmediums, wobei die Vorrichtung ein Mittel (14) zur Erzeugung eines hochfrequenten Magnetfeldes mit sich periodisch ändernder magnetischer Polarität nahe der Spur besitzt, sowie ein gepulstes, mit dem das Magnetfeld erzeugenden Mittel gekoppeltes Heizmittel (13, 19) zum selektiven Aufbringen von Wärme auf das Medium, um aufeinanderfolgend überlappende, magnetisch polarisierte Domänen zu bilden, welche längs der Spur codierte Daten darstellen, wobei die Wärme selektiv zu solchen Zeiten aufgebracht wird, zu denen die augenblickliche Polarität des Magnetfeldes an diesen Domänen der Polarität des Codes für die darauf aufzuzeichnenden Daten entspricht.

2. Vorrichtung nach Anspruch 1, bei welchem sich die magnetische Polarität des Magnetfeldes mit der Frequenz $f_B$ ändert und das gepulste Heizmittel mit einer Frequenz von etwa $2f_B$ aktiviert werden kann.

3. Vorrichtung nach Anspruch 2, bei welcher das gepulste Heizmittel zumindest einmal während jeder Periode des Magnetwechselfeldes aktiviert werden kann.

4. Vorrichtung nach Anspruch 2, bei welcher jede der einander aufeinanderfolgend überlappenden Domänen im wesentlichen kreisförmig ist und die Relativgeschwindigkeit v der Spur bezüglich des das Magnetfeld erzeugenden Mittels und des gepulsten Heizmittels durch die Beziehung $v \leq rf_B$ gegeben ist, wobei r der Radius einer der überlappenden Domänen ist.

5. Vorrichtung nach Anspruch 4, bei welcher der maximale Abstand zwischen aufeinanderfolgenden Domänen kleiner als 2r ist.

6. Vorrichtung nach Anspruch 5, bei welcher der Abstand zwischen aufeinanderfolgenden Domänen etwa gleich r ist.

7. Vorrichtung nach Anspruch 6, bei welcher der Abstand zwischen aufeinanderfolgenden Domänen etwa gleich 0,5 r ist.

8. Vorrichtung nach Anspruch 1, bei welcher das das Magnetfeld erzeugende Mittel eine Resonanzspule besitzt und das gepulste Heizmittel eine selektiv steuerbare Laserlichtquelle besitzt.

9. Vorrichtung nach Anspruch 1, bei welcher die aufeinanderfolgenden Domänen eine Reihe von im wesentlichen kontinuierlichen, länglichen, magnetisch polarisierbaren Domänen mit selektiv variabler Länge zum Codieren von Daten in Pulsbreitenmodulation-Codesbilden.

10. Vorrichtung nach Anspruch 9, bei welcher die durch die länglichen Domänen dargestellten, codierten Daten durch eine Änderung der Größe der aufeinanderfolgend überlappenden Domänen im wesentlichen nicht beeinflußt werden.

11. Vorrichtung nach Anspruch 10, bei welcher jede der aufeinanderfolgend überlappenden Domänen im wesentlichen kreisförmig ist und die Länge der länglichen magnetisch polarisierten Domänen entlang der Spur durch eine Änderung des Durchmessers jeder der aufeinanderfolgend überlappenden, im wesentlichen kreisförmigen Domänen im wesentlichen nicht beeinflußt wird.

12. Vorrichtung nach Anspruch 9, bei welchen der Pulsbreitenmodulationscode lauflängenbegrenzt ist und die Anzahl aufeinanderfolgender Nullen in diesem Code gerade ist.

13. Verfahren zum direkten Überschreiben codierter Daten längs einer Spur eines magnetooptischen Aufzeichnungsmediums, wobei das Verfahren folgende Schritte aufweist: Liefern eines hochfrequenten Magnetfeldes mit sich periodisch ändernder magnetischer Polarität nahe der Spur und selektives Aufbringen von Wärme auf das Medium, um aufeinanderfolgend überlappende magnetisch polarisierte Domänen zu bilden, welche längs der Spur codierter Daten darstellen, wobei die Wärme selektiv zu solchen Zeiten aufgebracht wird, zu denen die augenblickliche Polarität des Magnetfeldes an diesen Domänen der Polarität des Codes für die darauf aufzuzeichnenden Daten entspricht.

14. Verfahren nach Anspruch 13, bei welchem der Schritt des Lieferns eines Magnetfeldes den Schritt beinhaltet, daß die Polarität des Magnetfeldes mit der Frequenz $f_B$ geändert wird, und der Schritt des selektiven Erwärmens den Schritt beinhaltet, daß die Domänen mit einer Frequenz von etwa $2 f_B$ selektiv erwärmt werden.

15. Verfahren nach Anspruch 14, bei welchem der Schritt des selektiven Erwärmens den Schritt beinhaltet, daß die Domänen zumindest einmal während jeder Periode des Wechselmagnetfeldes selektiv erwärmt werden.

16. Verfahren nach Anspruch 14, welches weiters die folgenden Schritte beinhaltet: Bilden aufeinanderfolgend überlappender, im wesentlichen kreisförmiger Domänen und Bewegen der Spur bezüglich des ersten und des zweiten Mittels mit einer Geschwindigkeit v, die etwa durch die Beziehung $v \leq rf_B$ gegeben ist, wobei r der Radius einer der Domänen ist.

17. Verfahren nach Anspruch 16, bei welchem der Schritt des Bildens aufeinanderfolgender Domänen den Schritt des Bildens aufeinanderfolgender Domänen mit einem gegenseitigen Abstand von weniger als 2r beinhaltet.

**18.** Verfahren nach Anspruch 17, bei welchem der Schritt des Bildens aufeinanderfolgender Domänen den Schritt des Bildens aufeinanderfolgender Domänen mit einem gegenseitigen Abstand von etwa r beinhaltet.

**19.** Verfahren nach Anspruch 18, bei welchem der Schritt des Bildens aufeinanderfolgender Domänen den Schritt des Bildens aufeinanderfolgender Domänen mit einem gegenseitigen Abstand von etwa 0,5 r beinhaltet.

**20.** Verfahren nach Anspruch 13, welches weiters den Schritt aufweist, daß eine Reihe von im wesentlichen kontinuierlichen, länglichen, magnetisch polarisierten Domänen mit selektiv variabler Länge zum Codieren von Daten in Pulsbreitenmodulations-Codes gebildet wird.

**21.** Verfahren nach Anspruch 20, welches weiters den Schritt aufweist, daß durch die länglichen Domänen dargestellte Daten codiert werden, die durch eine Änderung der Größe der aufeinanderfolgend überlappenden Domänen im wesentlichen nicht beeinflußt werden.

**22.** Verfahren nach Anspruch 21, welches weiters die folgenden Schritte aufweist: Bilden aufeinanderfolgend überlappender, im wesentlichen kreisförmiger Domänen und Bilden länglicher, magnetisch polarisierter Domänen, deren Länge entlang der Spur durch eine Änderung des Durchmessers jeder der aufeinanderfolgend überlappenden, im wesentlichen kreisförmigen Domänen im wesentlichen nicht beeinflußt wird.

**23.** Verfahren nach Anspruch 20, welches weiters die Schritte aufweist: Codieren von Daten in einem Pulsbreitenmodulationscode mit Lauflängenbegrenzung und weiters Beschränken des Codes so, daß die Anzahl aufeinanderfolgender Nullen in dem Code gerade ist.

**Revendications**

**1.** Appareil pour la surécriture directe de données codées le long d'une piste d'un support d'enregistrement magnéto-optique, ledit appareil comprenant des moyens (14) de production d'un champ magnétique de haute fréquence ayant une polarité magnétique qui alterne périodiquement près de la piste, et des moyens de chauffage pulsé (13,19) couplés aux moyens de production de champ magnétique, pour appliquer sélectivement de la chaleur audit support afin d'engendrer des domaines magnétiquement polarisés et successivement en chevauchement représentant des données codées le long de la piste, la chaleur étant sélectivement appliquée à des instants tels que la polarité instantanée du champ magnétique à l'endroit desdits domaines correspond à la polarité du code pour les données à enregistrer à ces endroits.

**2.** Appareil suivant la revendication 1, dans lequel la polarité magnétique du champ magnétique alterne à une fréquence $f_B$ et les moyens de chauffage pulsé peuvent être activés à une fréquence de $2f_B$ environ.

**3.** Appareil suivant la revendication 2, dans lequel les moyens de chauffage pulsé peuvent être activés au moins une fois pendant chaque période du champ magnétique alternatif.

**4.** Appareil suivant la revendication 2, dans lequel chacun desdits domaines successivement en chevauchement est sensiblement circulaire, et la vitesse relative, v, de la piste par rapport aux moyens de production de champ magnétique et aux moyens de chauffage pulsé est donnée par la relation $v \leq rf_B$ où r est le rayon d'un desdits domaines en chevauchement.

**5.** Appareil suivant la revendication 4, dans lequel la distance maximale entre des domaines successifs est inférieure à 2r.

**6.** Appareil suivant la revendication 5, dans lequel la distance entre des domaines successifs est approximativement égale à r.

**7.** Appareil suivant la revendication 6, dans lequel la distance entre des domaines successifs est approximativement égale à 0,5 r.

**8.** Appareil suivant la revendication 1, dans lequel les moyens de production de champ magnétique comprennent un enroulement résonnant et les moyens de chauffage pulsé comprennent une source à commande sélective de lumière laser.

**9.** Appareil suivant la revendication 1, dans lequel lesdits domaines successivement en chevauchement forment une série de domaines magnétiquement polarisés, allongés, sensiblement continus et de longueur sélectivement variable, pour le codage des données en codes à modulation de largeur d'impulsion.

**10.** Appareil suivant la revendication 9, dans lequel les données codées représentées par lesdits domaines allongés sont sensiblement non affectées par la variation de la dimension desdits domaines successivement en chevauchement.

11. Appareil suivant la revendication 10, dans lequel chacun desdits domaines successivement en chevauchement est sensiblement circulaire, et la longueur des dits domaines magnétiquement polarisés allongés le long de la piste est sensiblement non affectée par une variation du diamètre de chacun desdits domaines sensiblement circulaires successivement en chevauchement.

12. Appareil suivant la revendication 9, dans lequel le code à modulation de largeur d'impulsion comporte une limitation de longueur de série et le nombre de zéros consécutifs dans ledit code est pair.

13. Méthode pour la surécriture directe de données codées le long d'une piste d'un support d'enregistrement magnéto-optique, ladite méthode comprenant les étapes de production d'un champ magnétique de haute fréquence ayant une polarité magnétique qui alterne périodiquement près de la piste, et d'application sélective de chaleur audit support pour engendrer des domaines magnétiquement polarisés et successivement en chevauchement qui représentent les données le long de la piste, la chaleur étant sélectivement appliquée à des instants où la polarité instantanée du champ magnétique à l'endroit des dits domaines correspond à la polarité du code pour les données à enregistrer à ces endroits.

14. Méthode suivant la revendication 13, dans laquelle l'étape de production d'un champ magnétique comprend l'étape d'alternance de la polarité du champ magnétique à une fréquence $f_B$, et l'étape de chauffage sélectif comprend l'étape de chauffage sélectif des domaines à une fréquence de $2f_B$ environ.

15. Méthode suivant la revendication 14, dans laquelle l'étape de chauffage sélectif comprend l'étape de chauffage sélectif des domaines au moins une fois pendant chaque période du champ magnétique alternatif.

16. Méthode suivant la revendication 14, comprenant en outre les étapes de : formation de domaines sensiblement circulaires successivement en chevauchement, et déplacement de la piste par rapport aux premiers et deuxièmes moyens à une vitesse relative, v, donnée approximativement par la relation $v \leq rf_B$ où r est le rayon d'un desdits domaines.

17. Méthode suivant la revendication 16, dans laquelle l'étape de formation de domaines successifs comprend l'étape de formation de domaines successifs mutuellement séparés par une distance inférieure à 2r.

18. Méthode suivant la revendication 17, dans laquelle l'étape de formation de domaines successifs comprend l'étape de formation de domaines successifs séparés les uns des autres d'une distance r environ.

19. Méthode suivant la revendication 18, dans laquelle l'étape de formation de domaines successifs comprend l'étape de formation de domaines successifs espacés les uns des autres d'une distance de 0,5 r environ.

20. Méthode suivant la revendication 13, comprenant en outre l'étape de formation d'une série de domaines magnétiquement polarisés, allongés, sensiblement continus et de longueur sélectivement variable, pour coder les données en codes à modulation de largeur d'impulsion.

21. Méthode suivant la revendication 20, comprenant en outre l'étape de codage des données représentées par lesdits domaines allongés, qui sont sensiblement non affectées par une variation de la dimension des dits domaines successivement en chevauchement.

22. Méthode suivant la revendication 21, comprenant en outre les étapes de formation de domaines sensiblement circulaires successivement en chevauchement, et de formation de domaines magnétiquement polarisés allongés dont la longueur le long de la piste est sensiblement non affectée par une variation du diamètre de chacun desdits domaines sensiblement circulaires successivement en chevauchement.

23. Méthode suivant la revendication 20, comprenant en outre les étapes de codage des données dans un code à modulation de largeur d'impulsion qui est limité en longueur de série, et en outre de contrainte dudit code de sorte que le nombre de zéros consécutifs dans ledit code soit pair.

FIG. 1

FIG. 2

FIG. 3A

FIG. 3B

FIG. 3C

FIG. 4

EP 0 243 656 B1

CLOCK

FIELD, $f_b$

POSSIBLE
TRANSITIONS

CODING EXAMPLES:

0 0 0 0 1 1 0 0 0 0

0 0 0 1 0 0 1 0 0 0

0 0 0 1 0 0 0 0 1 0 0 0

0 0 0 1 0 0 0 0 0 1 0 0 0

0 0 1 0 0 1 0 0 1 0 0 0 0 1 0 0 0 0 0 0 1 0 0 1 0 0

FIG. 5

EP 0 243 656 B1

PRIOR ART  PULSE WIDTH MODULATIONS:

(A)

← NORMAL LASER POWER

$l_{1a}$

← HIGHER LASER POWER

$l_{2a}$

DIRECT OVER WRITE PULSE WIDTH MODULATION:

(B)

← NORMAL LASER POWER

$l_{1b}$

← HIGHER LASER POWER

$l_{2b} = l_{1b}$

FIG. 6